# EUROPÄISCHE PATENTSCHRIFT

(11) **EP 1 332 339 B1**
(45) Veröffentlichungstag und Bekanntmachung des Hinweises auf die Patenterteilung: **08.03.2017**
(21) Anmeldenummer: 01993815.8
(22) Anmeldetag: 09.11.2001
(51) Int. Cl.: G01F 1/66, G10K 11/24, G10K 11/26

(54) **KOPPELELEMENT FÜR EIN ULTRASCHALL-DURCHFLUSSMESSGERÄT**
COUPLING ELEMENT FOR AN ULTRASONIC FLOWMETER
ELEMENT DE COUPLAGE POUR UN DEBITMETRE A ULTRASONS

(30) Priorität: 11.11.2000 DE 10055956
(43) Veröffentlichungstag der Anmeldung: 06.08.2003
(73) Patentinhaber: Endress + Hauser Flowtec AG, 4153 Reinach/BL (CH)
(72) Erfinder: WIEST, Achim, 78166 Donaueschingen (DE)
(74) Vertreter: Andres, Angelika Maria
(86) Internationale Anmeldenummer: PCT/EP2001/012979
(87) Internationale Veröffentlichungsnummer: WO 2002/039069

(56) Entgegenhaltungen:
- WO-A-96/41157
- US-A- 4 337 843
- US-A- 4 894 806

## Beschreibung

Die Erfindung betrifft ein Koppelelement für ein Ultraschall-Durchflußmeßgerät.

Ultraschall-Durchflußmeßgeräte werden vielfach in der Prozeß- und Automatisierungstechnik eingesetzt. Sie erlauben in einfacher Weise, den Volumendurchfluß in einer Rohrleitung berührungslos zu bestimmen.

Die bekannten Ultraschall-Durchflußmeßgeräte arbeiten entweder nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Stömungsrichtung der Flüssigkeit ausgewertet.

Hierzu werden Ultraschallimpulse sowohl in wie auch entgegen der Strömung gesendet. Aus der Laufzeitdifferenz läßt sich die Fließgeschwindigkeit und damit bei bekanntem Durchmesser des Rohrleitungsabschnitts der Volumendurchfluß bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen läßt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so daß dieses Prinzip hauptsächlich bei verunreinigten Flüssigkeiten Verwendung findet.

Die Ultraschallwellen werden mit Hilfe sogenannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Meßsysteme erhältlich. Bei diesen Systemen werden die Ultraschallwandler nur noch mit einem Spannverschluß an die Rohrwandung gepreßt. Derartige Systeme sind z. B. aus der WO-A-96/41157 EP-B-686 255, US-A 44 84 478 oder US-A 45 98 593 bekannt

Ein weiteres Ultraschall-Durchflußmessgerät, das nach dem Laufzeitdifferenz-Prinzip arbeitet, ist aus der US-A 50 52 230 bekannt. Die Laufzeit wird hier mittels Bursts, das sind kurze sinusförmige Ultraschallimpulse, ermittelt.

Die Ultraschallwandler bestehen normalerweise aus einem Piezoelement und einem Koppelkeil aus Kunststoff. Im Piezoelement werden die Ultarschallwellen erzeugt und über den Koppelkeil zur Rohrwandung geführt und von dort in die Flüssigkeit geleitet. Da die Schallgeschwindigkeiten in Flüssigkeiten und Kunststoffen unterschiedlich sind, werden die Ultarschallwellen beim Übergang von einem zum anderen Medium gebrochen. Der Brechungswinkel bestimmt sich nach dem Snell'schen Gesetz. Der Brechungswinkel ist somit abhängig von dem Verhältnis der Ausbreitungsgeschwindigkeiten in den beiden Medien. Derartigen Koppelkeile aus Kunststoff haben verschiedene Nachteile. In Kunststoffen ist die Schallgeschwindigkeit stark temperaturabhängig. So sinkt die Schallgeschwindigkeit typischerweise von ca. 2500 m/s bei 25° C auf ca. 2200 m/s bei 130° C. Damit ändert sich die Ausbreitungsrichtung der Ultraschallwellen in der Flüssigkeit und zusätzlich die Laufzeit des Ultraschallsignals im Kunststoff.

Beide Änderungen wirken sich bei nach dem Laufzeit-Differenz-Prinzip arbeitenden Meßmethoden ungünstig auf die Genauigkeit des Meßergebnisses aus.

Ein weiterer Nachteil von Kunststoffen besteht darin, daß sie nur bedingt längere Zeit höheren Temperaturen von 300° standhalten.

Um diese Nachteile zu umgehen, sind bereits Koppelkeile aus Metall bekannt, die jedoch nur in sehr geringem Umfang eingesetzt werden. Der wesentliche Grund hierfür ist der zu geringe Grenzwinkel dieser Koppelkeile.

Oberhalb dieses Grenzwinkels können Ultraschallsignale nicht mehr von der Flüssigkeit in den Koppelkeil einkoppeln. Die Ultraschallsignale werden an der Grenzfläche Flüssigkeit - Metall total reflektiert.

Aufgabe der Erfindung ist es ein Koppelelement für ein Ultraschall-Durchflußmeßgerät anzugeben, das die oben angegebenen Nachteile nicht aufweist, das insbesondere weniger temperaturempfindlich ist und das kostengünstig und einfach herstellbar ist.

Gelöst wird diese Aufgabe durch ein Ultraschall-Durchflussmessgerät gemäß Anspruch 1.

Die wesentliche Idee der Erfindung besteht darin, mehrere Segmente am Koppelelement vorzusehen, in denen Ultraschallwellen von der Kontaktebene mit dem Piezoelement bis zu der Grundplatte getrennt voneinander laufen. Die Länge der einzelnen Segmente ist so bestimmt, daß Ultraschallwellen an der Grundplatte unter einem bestimmten Winkel α abgestrahlt bzw. empfangen werden.

Das Koppelelement ist einstückig hergestellt.

Als Material für das Koppelelement eignet sich besonders Metall.

Zur Vereinfachung der Herstellung sind die Segmente als Kreissegmente ausgebildet.

Nachfolgend ist die Erfindung anhand eines in der Zeichnung dargestellten Ausführungsbeispiels näher erläutert. Es zeigen:
Fig. 1 schematische Darstellung eines Ultraschall-Durchflußmessgeräts und
Fig. 2 Schnittdarstellung eines erfindungsgemäßen Koppelelements für ein Ultraschall-Durchflußmessgerät gemäß Fig. 1

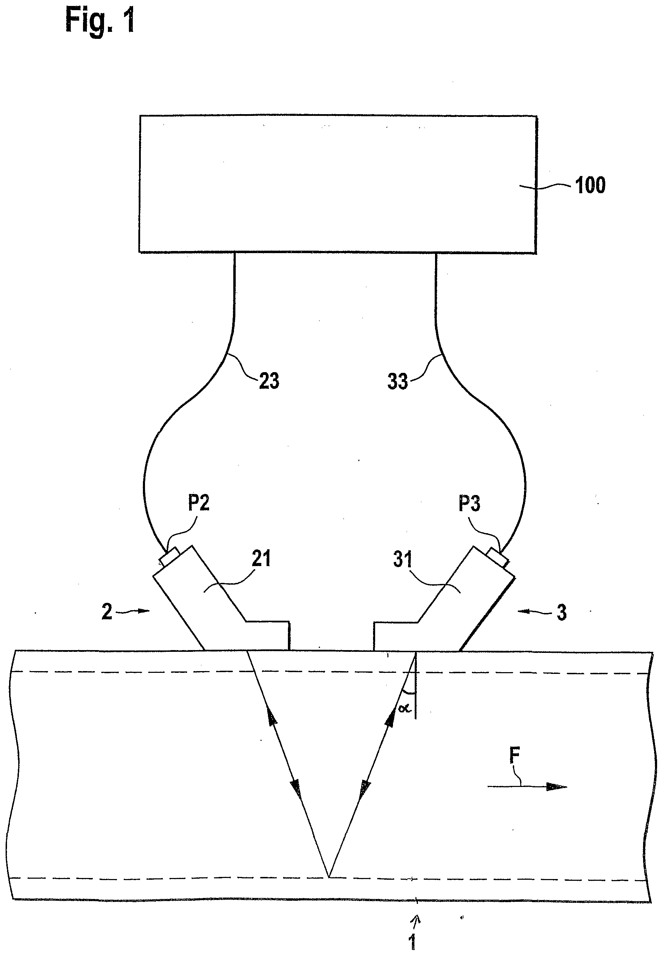

Fig. 1 zeigt in stark vereinfachter Darstellung ein Ultraschall-Durchflußmessgerät mit zwei Ultraschallwandlern 2, 3, die auf der Außenwandung einer Rohrleitung 1 achsparallel versetzt angeordnet sind. Die Flüssigkeit F in der Rohrleitung 1 fließt in Pfeilrichtung.

Dieses Wandlerpaar kann auf zwei unterschiedliche Weisen betrieben werden. Entweder wirkt der Ultraschallwandler 2 als Sendewandler und der Ultraschallwandler als 3 als Empfängerwandler oder der Ultraschallwandler 2 als Empfängerwandler und der Ultraschallwandler 3 als Sendewandler, wodurch abwechselnd in Strömungsrichtung bzw. entgegen der Strömungsrichtung gemessen wird.

Jeder der Ultraschallwandler 2 bzw. 3 besteht aus jeweils einem Piezoelement P2 bzw. P3 und jeweils einem Koppelelement 21 bzw. 31, das die Ultraschallsignale unter einem von 90° verschiedenen Winkel α entweder in die Wandung der Rohrleitung ein- bzw. auskoppelt werden. Der Winkel α ist so gewählt, daß das an der gegenüberliegenden Wandung der Rohrleitung 1 reflektierte Signal auf den jeweils anderen Ultraschallwandler trifft.

Die Piezoelemente P2, P3 wandeln entweder elektrische Impulse in mechanische Schwingungen, die eigentlichen Ultraschallsignale, oder umgekehrt mechanische Schwingungen in elektrische Impulse um.

Beide Ultraschallwandler 2,3 sind jeweils über Anschlußleitungen 23 bzw. 33 mit einer Meßschaltung 100 verbunden. Über diese Anschlußleitungen 23, 33 werden die elektrischen Impulse geführt. Derartige Meßschaltungen 100 sind bekannt und nicht Gegenstand der Erfindung.

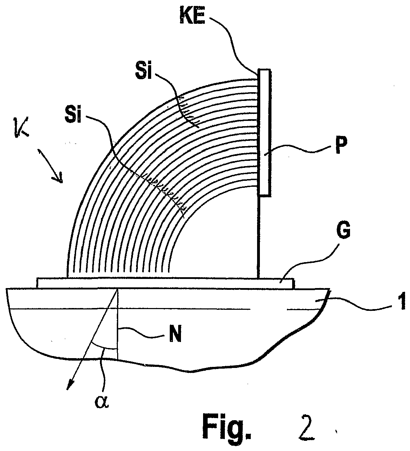

Fig. 2 zeigt ein erfindungsgemäßes Koppelelement K. Von einer Grundplatte G verlaufen mehrere Segmente Si zum Piezoelement P. Das Piezoelement P ist fest mit dem Koppelelement K verbunden. Die Ebene an der das Piezoelement P und das Koppelelement K berühren wird als Kontaktebenen KE bezeichnet.

In vorteilhafter Weise ist das Koppelelement K einstückig ausgebildet. Der Abstand A zwischen den einzelnen Segmenten Si beträgt etwa 1 mm. Die Segmente Si sind selbst etwa 20 mm breit.
Als Material für das Koppelelement K eignet sich besonders Metall.

Besonders einfach lassen sich kreisförmige Segmente Si herstellen.

Nachfolgend ist die Funktionsweise der Erfindung anhand eines Sendewandlers näher beschrieben. Die entsprechenden Überlegungen gelten für einen Empfängerwandler.

Das Piezoelement P erzeugt beim Anlegen einer Wechselspannung Ultraschallwellen. Diese Ultraschallwellen werden über die Kontaktebenen KE in das Koppelelement K eingeleitet und in den einzelnen Segmenten Si als Teilwellen TW getrennt voneinander geführt. Da die Segmente Si unterschiedliche Längen aufweisen, besitzen die einzelnen Teilwellen unterschiedliche Phasen in der Ebenen der Grundplatte G. Die Länge der einzelnen Segmente S und damit der Phasenunterschied zwischen benachbarten Teilwellen TW ist dabei so berechnet, daß dies gerade einem bestimmten Ausbreitungswinkel α in der Flüssigkeit F entspricht. Der Ausbreitungswinkel α wird relativ zur Flächennormalen N der Grundplatte G bestimmt.

Dadurch daß das Koppelelement K aus Metall gefertigt ist, wirken sich Temperaturänderungen nur wenig auf die Ausbreitungsgeschwindigkeit der Ultraschallwellen im Koppelelement K aus. So wird einerseits die Laufzeit des Signals im Koppelelement K nur wenig beeinflußt und andererseits bleibt der Winkel unter dem die Ultraschallwellen in die Flüssigkeit F eingekoppelt auch bei Temperaturänderungen werden quasi unverändert.

Dadurch wird die Laufzeit der Ultraschallwellen unwesentlich beeinflußt, was sich insgesamt positiv auf die Genauigkeit der Differenzlaufzeit-Messung auswirkt.

## Patentansprüche

1. Ultraschall-Durchflußmeßgerät umfassend ein Piezoelement, ein Koppelelement , eine Grundplatte und eine Rohrleitung, wobei das Koppelelement mehrere Segmente Si aufweist, die getrennt voneinander kreissegmentförmig von einer Kontaktebene KE für ein Piezoelement P bis zu einer Grundplatte G verlaufen, wobei die Längen der einzelnen Segmente Si unterschiedlich und so bestimmt sind, daß an der Grundplatte G Ultraschallwellen unter einem bestimmten Winkel α abgestrahlt bzw. empfangen werden, wobei das Koppelelement K einstückig ausgebildet ist, wobei der Winkel α von 90° verschieden ist und wobei die Grundplatte an der Rohrleitung (1) außen anliegt.

2. Ultraschall-Durchflußmeßgerät nach Anspruch 1, **dadurch gekennzeichnet, daß** das Koppelelement K aus Metall ist.

## Claims

1. Ultrasonic flowmeter comprising a piezoelectric element, a coupling element, a base plate and a pipe, wherein the coupling element has several segments Si, that extend, separate from one another, in the form of a circle segment, from one contact plane KE for a piezoelectric element P as far as the base plate G, wherein the lengths of the individual segments Si are different and determined in such a way that, at the base plate G, ultrasonic waves are emitted or received at a certain angle α, wherein the coupling element K is a single piece, wherein the angle α is not equal to 90° and wherein the base plate rests on the pipe (1) on the outside.

2. Ultrasonic flowmeter as claimed in Claim 1, **characterized in that** the coupling element K is made of metal.

## Revendications

1. Débitmètre à ultrasons comprenant un élément piézoélectrique, un élément de couplage, une plaque de base et une conduite, l'élément de couplage comportant plusieurs segments SI, qui s'étendent en forme de segment de cercle, séparément les uns des autres, d'un plan de contact KE pour un élément piézoélectrique P jusqu'à une plaque de base G, les longueurs des segments individuels SI étant différentes et déterminées de telle façon que les ondes ultrasonores sont émises ou reçues sur la plaque de base G selon un angle α déterminé, l'élément de couplage K étant constitué d'une seule pièce, l'angle α étant différent de 90° et la plaque de base reposant à l'extérieur contre la conduite (1).

2. Débitmètre à ultrasons selon la revendication 1, **caractérisé en ce que** l'élément de couplage K est en métal.
